# EUROPEAN PATENT APPLICATION

(11) **EP 4 737 708 A2**
(43) Date of publication of application: **06.05.2026**
(21) Application number: 26167708.2
(22) Date of filing: 16.02.2024
(51) Int. Cl.: F03D 1/06

(54) **A ROTOR BLADE, NOISE REDUCTION MEANS FOR A ROTOR BLADE, AND METHOD FOR REDUCING NOISE FOR A ROTOR BLADE**

(30) Priority: 16.02.2023 NL 2034166
(62) Divisional of application: 24706240.9
(71) Applicant: Mutech B.V., 2629 HS Delft (NL)
(72) Inventor: VAN CAMPENHOUT, Olaf Wilhelmus Gerardus, 2629 HS DELFT (NL); VAN NESSELROOIJ, Michiel, 2629 HS DELFT (NL); HARTOG, Friso Hans, 2629 HS DELFT (NL); RAGNI, Daniele, 2629 HS DELFT (NL); AVALLONE, Francesco, 2629 HS Delft (NL)
(74) Representative: Hoyng Rokh Monegier B.V.

(57) **Abstract**

The present invention relates to a wind turbine rotor blade comprising a leading-edge section having a leading-edge; a trailing-edge section having a trailing-edge; a pressure-side surface and a suction-side surface extending from the leading-edge section and meeting at the trailing-edge section; and an aerodynamic structure, for reducing noise, provided at the trailing-edge section, wherein the aerodynamic structure comprises a plurality of pressure communication channels between the suction-side surface and the pressure-side surface; a camber line connecting the leading-edge section and the trailing-edge section and lying halfway between the pressure-side surface and the suction-side surface, wherein the camber line of the aerodynamic structure is tilted toward the suction-side surface with respect to a camber line of the rest of the wind turbine rotor blade.

## Description

### TECHNICAL FIELD

The present invention relates generally to a rotor blade, noise reduction means for a rotor blade, a wind turbine having rotor blades and methods for reducing noise for rotor blades. The invention specifically relates to reducing noise while having low drag at a trailing-edge portion of a wind turbine rotor blade by introducing pressure communication channels such as through-holes to the trailing-edge portion. The pressure communication channels can be provided to rotor blades, trailing-edge inserts, add-ons, or in any other forms that can reduce the noise of a rotor blade.

### BACKGROUND

A wind turbine is a device that is designed to capture the energy of the wind and convert it into a form that can be used to generate electricity. The wind turbine includes a rotor that is mounted on a tower. The wind turbine includes a hub and one or more rotor blades that are mounted on the hub and are configured to generate lift when the wind blows over them. The lift generated by the rotor blades causes the rotor to rotate about an axis of the hub, and this rotational energy is then transmitted to a generator via a drivetrain. The generator converts the rotational energy into electrical energy, which is then transmitted to a power grid or stored in a battery system for later use. The wind turbine may also include various sensors and control systems that are used to optimize its performance and ensure that it is operating safely and efficiently.

A wind turbine rotor blade has a leading edge, a trailing edge, and opposed suction side (upper) and pressure side (lower) side surfaces each beginning at the leading edge and terminating at the trailing edge.

The wind turbine rotor blades create noise when they are operating. The rotor blades are moving through the air at a high speed, and this movement can create turbulence and vortices that produce noise. The materials used to make the rotor blades may also play a role in the amount of noise they generate, as some materials may be more prone to vibrating or producing other types of noise than others. Noise reduction is particularly important for on-shore wind turbines because they are built on land, as opposed to off-shore wind turbines which are built in bodies of water which are typically more remote from residential areas. For on-shore industry scale wind turbines, the noise problem is more problematic due to their high speed and physical scale. The acoustic power of the noise produced by a trailing-edge of a wind turbine blade scales exponentially to free-stream flow speed. It is hence important to have a proper noise reduction technology for installing large wind turbines with reasonable noise level at a location close to homes.

Due to the potential health hazard and its societal impact, governing bodies are establishing regulations and guidelines on noise requirements for wind turbines. For example, in 2018, the World Health Organization has issued guidelines for wind turbine noise, recommending the day-evening-night-weighted Sound Pressure Level (SPL) to be below 45 dB. The level of noise hence determines the region where the wind turbines can be installed, or correspondingly the manner in which the wind turbine can be operated in order to comply with noise requirements in the surroundings.

Turbulent boundary-layer trailing-edge noise (TBL-TE noise) is a dominant noise source of a wind turbine, and is caused by the interaction between the turbulent boundary layer of air that flows from the blade's leading-edge to its trailing-edge, which is the back edge of the blade where the air flows off of it. One way in which TBL-TE noise can be generated is through the formation of vortices at the trailing-edge of the blade. These vortices can create a fluctuating pressure field that radiates noise into the surrounding air.

There are several factors that can influence the level of TBL-TE noise that is generated by a wind turbine rotor blade. These include the shape and size of the blade, the speed at which the blade is moving through the air, material of the blade, surface structure and property of the trailing-edge, and the properties of the air flow over the blade.

A promising approach for reducing TBL-TE noise is using through-holes near the trailing-edges. The through-holes can be formed integrally in a wind turbine rotor blade or can be attached as an add-on to a trailing-edge of a wind turbine rotor blade. This through-hole approach uses a series of small through-holes, openings, or through-holes in or near a trailing-edge portion of a blade. The through-holes allow air pressure communication between the suction-side and the pressure-side surfaces. As a result, the pressure differences between the suction-side and pressure-side merge more smoothly at the trailing-edge compared to a blade without trailing-edge through-holes, which can help to reduce the level of turbulence and noise generated by the blade as it moves through the air. One advantage of trailing-edge add-ons with through-holes is that they are relatively simple and low-cost to implement. They can be easily added to existing wind turbine blades, and they do not require any additional power or control systems to operate.

The Dutch patent NL2025831B1 discloses a wind turbine blade provided with a trailing-edge, wherein the trailing-edge is provided with an add-on with through-holes. The add-on with through-holes is provided with through-holes such that the through-holes have an open area at the suction-side that is larger than an open area at the pressure-side. The increasing dimension is used for providing anticlogging properties by purging.

Trailing-edges with through-holes however may increase the drag on the blade, which can result in reducing the efficiency of the turbines. The through-holes, or perforations, allow surrounding airflow to flow through and create drag. In addition, the through-holes may also increase the risk of having reduced structural stability. The dynamics of the trade-offs between through-holes and their downside is not fully known in the art and are being researched intensively.

Therefore, it is desired to have a rotor blade wherein the rotor blade has a trailing-edge region having through-holes which can reduce noise and keep the drag produced by the aerodynamic structure low.

The background section of this document is provided to place embodiments of the present invention in technological and operational context to assist those skilled in the art understanding the scope and utility of the present invention. Unless explicitly identified as such, no statement herein is admitted being prior art merely by its inclusion in the Background section.

### SUMMARY

It is an object of the present invention to reduce noise at or near the trailing-edge of a wind turbine blade while having low drag.

According to a first aspect of the invention, the present disclosure is directed to a wind turbine rotor blade for providing low noise at a trailing-edge section of the wind turbine rotor blade. The noise is reduced passively by an aerodynamic structure located at the trailing-edge section of the rotor blade. The aerodynamic structure is designed to keep the drag produced by the aerodynamic structure low.

The wind turbine rotor blade is designed to utilize an airflow flowing from a leading-edge to a trailing edge. The wind turbine rotor blade further comprises a pressure-side surface and a suction-side surface extending from the leading edge and meeting at the trailing-edge. The airflow arriving at the leading-edge will split in a pressure-side flow and a suction-side flow. The trailing-edge of the blade is the last part of the blade separating the pressure-side flow from the suction-side flow before the airflows converge.

The wind turbine rotor blade comprises a leading-edge section having a leading-edge, a trailing-edge section having a trailing-edge. The term "section" is used in this document to indicate a part of a wind turbine rotor blade which may be composed of one or more elements forming the part of the wind turbine rotor blade. A trailing-edge section may comprise a trailing-edge defining an end of a wind turbine rotor blade in the direction of the airflow. If an add-on structure is connected to the wind turbine rotor blade and extending the length of the wind turbine rotor blade in the direction of the airflow, the add-on structure defines the trailing-edge of the wind turbine rotor blade.

An aerodynamic structure is provided at the trailing-edge section. An aerodynamic structure at the trailing edge section is positioned upstream relative to the trailing-edge where the air flows merge. In other words, at least a part of an airflow flowing from the leading-edge to the trailing-edge will enter in, and in embodiments flow through, the aerodynamic structure before reaching the trailing-edge. The aerodynamic structure provides partial communication between the airflows on the pressure-side and suction-side of the blade, upstream from the trailing edge of that blade.

In embodiments, the aerodynamic structure comprises a plurality of through-holes or pressure communication channels. The plurality of pressure communication channels may have at least one pressure communication channel having an hourglass channel configuration (HGCC). When a pressure communication channel has the hourglass channel configuration (HGCC), the HGCC is formed by a channel that connects:
- a first surface area formed on the suction-side surface and having a first size;
- a second surface area formed on the pressure-side surface and having a second size;
- a third minimal surface area having a third size formed within the pressure communication channel, located between the first surface area and the second surface area, wherein the third size is smaller, preferably at least 10%, more preferably at least 20%, than the first size and than the second size.

The following provides embodiments or details of a channel with HGCC. The hourglass channel configuration, when viewed in cross-section taken from a plane perpendicular to the longitudinal axis of the wind turbine rotor blade, shows a channel having an hourglass shape. The channel starts at either (suction or pressure) side of the trailing edge section and is connected via a narrow waist between the pressure-side and suction-side surface. The narrow waist functions as a throttle. The pressure communication channel can be formed like a tube that is throttled in a middle part. Preferably the throttling is gradual. A HGCC is also formed by a channel having starting points on either side of the trailing edge, connected via a throttled connection. The term "pressure communication channel" includes any air passageway which allows communication of air pressure between two points or surfaces. A pressure communication channel can be a through-hole and can also be an air passageway having other aerodynamic components. In preferred embodiments, the pressure communication channel is a direct channel connection between two points, without any side channels or further connection points.

In embodiments, the aerodynamic structure may comprise a first pressure communication channel having the HGCC and a second pressure communication channel having the HGCC. The second pressure communication channel is separate from, here meaning not connected to, the first channel. The aerodynamic structure may also contain pressure communication channels not having the HGCC. The plurality of pressure communication channels is configured to influence an airflow flowing from the leading-edge section to the trailing-edge section.

A size of a surface area of a pressure communication channel may be defined by an average diameter of the cross-sectional surface area when viewed from the direction perpendicular to the pressure-side surface or the suction-side surface.

In embodiments, the third minimal surface area is located in the throttle between the first surface area and the second surface area. The third minimal surface area has a third size which is smaller than the first size and the second size. The through-holes are configured to form pressure communication channels between the suction-side surface and the pressure-side surface. The blade body forms a boundary between the pressure-side and suction-side, which in turn allows the pressure to differ at both sides. The pressure communication channels will, at an upward/upstream location from the trailing edge, form the (first) open connection between the two sides, where the two different pressures meet. The channel will accommodate a pressure differential between the two sides. As a result, the pressure communication channel is throttled. The third minimal surface area throttles the air flow from the pressure-side to the suction-side, while still allowing a limited amount of air to flow, which reduces the pressure difference.

In embodiments, the plurality of through-holes or pressure communication channels may define a pressure communication channel number density indicating how dense in number the plurality of through-holes or pressure communication channels is distributed. The sizes of the pressure communication channels and the pressure communication channel number density may combinedly determine an overall surface area density occupied by the pressure communication channels. The overall surface area density may be defined between 0 and 0.99, wherein 0 indicates no pressure communication channel is present on a surface such as suction-side surface or a pressure-side surface, and wherein 0.99 indicates 99% of the pressure-side or suction-side surfaces is occupied by the pressure communication channels. In embodiments, the overall surface area density is between 0.01 and 0.80, preferably between 0.05 and 0.70, more preferably between 0.07 and 0.60.

A camber line is a reference line extending from the leading-edge to the trailing-edge that connects the midpoints between the pressure-side surface and the suction-side surface. The pressure communication channel number density of the plurality of pressure communication channels may vary along the camber line. Preferably, the plurality of pressure communication channels is provided with an increasing pressure communication channel number density in the direction from the leading-edge section to the trailing-edge section along the camber line, also referred as airflow direction. More preferably, the pressure communication channel number density of similar sized pressure communication channels is continuously increasing in the direction from the leading-edge section to the trailing-edge section along the camber line.

In embodiments, the hourglass shape of the pressure communication channels having the HGCC may be viewed from a cross-sectional plane substantially perpendicular to a camber line and/or in a cross-sectional plane substantially perpendicular to a longitudinal axis of the wind turbine rotor blade. The profile of the HGCC may be symmetric or asymmetric. The first size of the first surface area on the suction-side surface may be different from the second size of the second surface are on the pressure-side surface. A pressure communication channel may define a centerline which is a reference line connecting the center of the pressure communication channel. The centerline is substantially perpendicular to the suction-side and pressure-side surfaces. The cross-sectional surface area of the pressure communication channel may vary along the centerline. The pressure communication channel may have one or more minimal surface areas located at one location along the centerline or located continuously along a portion of the centerline.

In embodiments, the plurality of pressure communication channels may have various cross-sectional shapes, on suction-side and pressure-side surfaces, such as circle, circle having a flat portion, ellipse, triangle, diamond, rectangle, kite, trapezium, parallelogram, rhombus, polygons, or any combination thereof.

In embodiments, the plurality of pressure communication channels may be a form of acoustic communication channels. The acoustic communication channels, preferably formed by the pressure communication channels or channels with a membrane, allow for acoustic communication between the pressure-side and the suction-side surfaces and may prevent air flow. The prevention of air flow can be achieved by having a structure in the acoustic communication channel that prevent an air flow while allowing for acoustic waves to pass from one surface to another. The prevention can be achieved by pressure communication channels or channels with a membrane.

The increasing pressure communication channel number density allows to avoid having a periodic distribution of the pressure communication channels which may generate extra noise or may not be able to reduce noise at certain acoustic frequencies. The periodic distribution can also be referred to as positions according to a regular grid. Further, by having a pressure communication channel number density increasing in the direction from the leading-edge section to the trailing-edge section, the pressure communication channels are more effectively located according to the level of noise produced along a camber line. It is known that the level of turbulent boundary-layer trailing-edge noise is mostly focused at the trailing-edge. This increasing pressure communication number density of pressure communication channels allows for avoiding excessive number of pressure communication channels located remote from the trailing edge which may produce unnecessary drag effect which may restrain the overall efficiency of the wind turbine. In most wind turbine rotor blades, the distance between pressure-side and suction-side surface decreases along the camber line toward the trailing-edge.

In embodiments, the plurality of pressure communication channels is distributed in an arbitrary, irregular manner so that it does not form periodicity in any direction on the suction-side surface and the pressure-side surface. Periodicities may perform poorly at certain frequencies. Not being bound by theory, a noise created by such periodic structure is known as tonal noise. Preferably, the plurality of pressure communication channels is irregularly distributed with at least three different spacings between the pressure communication channels, more preferably with at least four different spacings, even more preferably with at least five different spacings, and even more preferably with at least six different spacings.

In embodiments, the plurality of pressure communication channels may have various sizes and shapes of pressure communication channels on the suction-side and pressure-side surfaces. The sizes and shapes of pressure communication channels are defined as the sizes and shapes in the planes perpendicular to the centerline of the pressure communication channel. The sizes and shapes may also vary along the centerline. This allows for further diminishing periodicities that may reduce the noise reduction performance and hence broadening the target noise frequencies. The plurality of pressure communication channels may have cross-sectional surface areas having an average diameter between 0.5 - 2.0 mm. In other words, the first size of the first surface area and the second size of the second surface area may be between 0.5 - 2.0 mm. The ratio between the third size of the minimal surface area and the first or second size may be between 1:1 and 1:2. Preferably, the plurality of pressure communication channels has at least three different sizes, more preferably at least five different sizes.

In embodiments, the pressure-side and/or the suction-side can be connected to an inner surface of the pressure communication channel in a generally continuous manner with limited discontinuity In other words, a pressure communication cannel may have a generally continuous inner surface continuously connected to the suction-side or the pressure-side. This allows the airflow to flow smoothly from the suction-side or the pressure-side into the pressure communication channel without going over any discontinuous obstacles which may generate noise. The generally continuous inner surface may be present along the entire length of the pressure communication channel along the reference centerline along the longitudinal axis. The generally continuous surface may also present between the surface of the suction-side of the blade and the inner surface of the pressure communication channel. The inner surface of the plurality of pressure communication channels is smooth, or varied continuously, so that it does not contain significant irregularities or sharp edges which may create extra localized noise. The smoothness allows an airflow flowing through the pressure communication channel is gently merged with the airflow flowing on the suction-side or pressure-side surface, thereby keeping the drag force due to the airflow flowing through the pressure communication channel low. This prevents the separation of any airflow through the pressure communication channel at a sharp edge that would lead to an increased drag. The pressure communication channels may be configured to have a gradually decreasing cross-sectional surface area toward the minimal surface area from the first surface area formed on the suction-side surface and/or from the second surface area formed on the pressure-side surface. Preferably, the gradual decreasing is smooth and forming a smooth surface inside the pressure communication channels. The smooth transition of the surface allows for reducing or damping the speed of airflow flowing into the pressure communication channels from the suction-side surface and/or the pressure-side surface. The damped speed of airflow results in a less amount of air flowing through the pressure communication channels creating less drag.

In embodiments, the plurality of pressure communication channels may further comprise at least one airflow blocking means which is located adjacent to the minimal surface area. The airflow blocking means is configured to block the airflow pressure communication between the first surface area and the second surface area. The airflow blocking means may be acoustically permeable. For example, the airflow blocking means may be a flexible or elastic membrane covering a cross section located adjacent to the minimal surface area and allow kinetic energy, e.g., vibration energy, be transferred between the suction-side surface and the pressure-side surface. The airflow blocking means may be configured to filter out airflow but to allow vibration, or vibrational energy to flow through the pressure communication channels. This means that the airflow cannot flow through the pressure communication channels but the vibrational energy may be transferred, hence communicated, to the other side of the airflow blocking means.

In embodiments, the aerodynamic structure having the plurality of pressure communication channels is an add-on attached to the rest of the wind turbine rotor blade while extending the length of the wind turbine rotor blade in the direction of the airflow, the add-on structure defines the trailing-edge of the wind turbine rotor blade. When the add-on is extending a longitudinal (leading-edge to trailing-edge) length of the blade, the trailing-edge is an extending edge provided by the add-on. By having an add-on configuration, the aerodynamic structure is easily replaceable for maintenance or for modification of the pressure communication channels. Preferably, the add-on comprises multiple pieces or elements that can be installed side by side along the trailing-edge section.

In embodiments, the aerodynamic structure is integrally formed with the rest of the wind turbine rotor blade.

In embodiments, the aerodynamic structure may be the trailing-edge section of wind turbine rotor blade and connected to the rest of the wind turbine rotor blade via a connecting means. The connecting means may be or be any combination of: (i) a butt joint, (ii) a socket at the suction-side surface, (iii) a socket at the pressure-side surface, (iv) a hinge, (v) a flexible connecting member, or (vi) flexible connecting sheet elements.

The butt joint may be formed by mechanical fastening or chemical adhesion. The mechanical fastening may include riveting, bolting, welding, and screwing. The chemical adhesion may include using adhesive, glue, epoxy, solvent bonding, or viscosity-enhanced bonding.

The socket on the suction-side and/or the pressure-side surfaces may be in form of bolt sockets, nut plates, pins, captive screws, quick-release pins, press-fit pins, knurled pins. Chemical adhesion may also be used for connecting via the sockets.

The hinge may be a pin hinge, friction hinges, flexible hinge, and living hinge.

The flexible connecting member may be a flexible or elastic body that is placed between the aerodynamic structure and the rest of the wind turbine rotor blade. The flexible connecting member may be physically and/or chemically connected to the aerodynamic structure and the rest of the wind turbine rotor blade. The flexibility of the flexible connecting member allows the aerodynamic structure to passively fluctuate in reaction to the airflow flowing over the blade surfaces. Alternatively, the flexible connecting member may be flexible sheets attached to suction-side and pressure-side surfaces of the aerodynamic structure and configured to make contact with the suction-side surface and the pressure-side surface. The flexible sheets may have an elasticity which allows for firmly connecting the aerodynamic structure to the rest of the wind turbine rotor blade. A flexible sheet holder may be installed on the pressure-side and/or suction-side surface to accommodate and to hold the flexible sheets between the pressure-side surface and the flexible sheet holder and/or between the suction-side surface and the flexible sheet holder.

In embodiments, a camber line of the aerodynamic structure may be different from a camber line of the rest of the wind turbine rotor blade. As mentioned earlier, a camber line is a reference line extending from the leading-edge to the trailing-edge that connects the midpoints between the pressure-side surface and the suction-side surface. Preferably, the camber line of the aerodynamic structure is tilted toward the suction-side surface with respect to the camber line of the rest of the wind turbine rotor blade. More preferably, the camber line of the aerodynamic structure is tilted toward the suction-side surface with an angle of at least 1°. In embodiments the angle is between 1° and 10°. In preferred embodiments, the angle is between 1-5°. In embodiments, the angle is more preferably between 5-10°, even more preferably 10-20°, and even more preferably 20-30°.

In embodiments, the aerodynamic structure may further comprise a serration at the trailing-edge, wherein the dimension of the serration is sub-centimeter.

According to a second aspect of the invention, the present disclosure is directed to an aerodynamic structure that can be added or connected to a wind turbine rotor blade for noise reduction while having a low drag.

In embodiments, the aerodynamic structure may have a pressure-side surface and a suction-side surface which are suitable for to form a continuous airfoil with a wind turbine rotor blade. When added or connected to the wind turbine rotor blade, the pressure-side and suction-side surfaces of the aerodynamic structure are flush with the pressure-side and suction-side surfaces of the wind turbine rotor blade respectively. The aerodynamic structure contains a downstream trailing-edge where the pressure-side surface and the suction-side surface meet. The opposite side of the trailing-edge along a camber line is a connecting edge, positioned upstream. The connecting edge can be connected to the trailing-edge of a wind turbine rotor blade. The aerodynamic structure has a plurality of pressure communication channels, with a first and second separate pressure communication channel that both have an hourglass channel configuration (HGCC) or any of the embodiments thereof described herein. The pressure communication channels form pressure communication channels between the suction-side surface and the pressure-side surface. The pressure communication channels facilitate the balancing of pressure fluctuations in two turbulent boundary layer airflows on the suction-side surface and pressure-side surface. As a result, the profile of the pressure communication channel has an hourglass-like structure for example having a narrow waist between the suction-side and pressure-side surface.

In embodiments, the plurality of pressure communication channels may define a pressure communication channel number density indicating how dense the plurality of pressure communication channels is distributed. A camber line of the aerodynamic structure is defined by a reference line extending from the connecting-edge to the trailing-edge that connects the midpoints between the pressure-side surface and the suction-side surface. The pressure communication channel number density of the plurality of pressure communication channels may vary along the camber line. Preferably, the plurality of pressure communication channels is provided with an increasing pressure communication channel number density in the direction from the connecting-edge section to the trailing-edge section along the camber line. More preferably, the pressure communication channel number density is continuously increasing in the direction from the connecting-edge section to the trailing-edge section along the camber line.

The increasing pressure communication channel number density can prevent local periodic distribution which may not be able to reduce noise at certain acoustic frequencies. Further, by concentrating the pressure communication channel density near the trailing-edge, the pressure communication channels are more effectively located according to the level of noise produced along a camber line. It is known that the level of noise increase along the camber line toward the trailing-edge. This effective distribution of pressure communication channels allows for avoiding excessive pressure communication channels located remote from the trailing edge which may produce unnecessary drag effect which may restrain the overall efficiency of the wind turbine. In most wind turbine rotor blades, the distance between pressure-side and suction-side surface decreases along the camber line toward the trailing-edge. The increasing pressure communication channel density hence additionally allows for having a smaller number of pressure communication channels in the thicker region which may generate a significant drag due to the large pressure difference between the suction-side and pressure-side surfaces.

In embodiments, the plurality of pressure communication channels is distributed in an arbitrary, irregular manner so that it does not form periodicity in any direction on the suction-side surface and the pressure-side surface. Noise-reduction with periodic aerostructures may perform poorly at certain frequencies. Preferably, the plurality of pressure communication channels is irregularly distributed with at least three different spacings between the pressure communication channels, more preferably with at least four different spacings, even more preferably with at least five different spacings, and even more preferably with at least six different spacings.

In embodiments, the plurality of pressure communication channels may have various cross-sectional shapes such as circle, ellipse, triangle, diamond, rectangle, kite, trapezium, parallelogram, rhombus, polygons, or any combination thereof.

In embodiments, the plurality of pressure communication channels may have various sizes and shapes of pressure communication channels. This allows for further diminishing periodicities that may reduce the noise reduction performance and hence broadening the tarte noise frequencies. The plurality of pressure communication channels may have cross-sectional surface areas having average diameters between 0.5 - 2.0 mm. In other words, the first size of the first surface area and the second size of the second surface area may be between 0.5 - 2.0 mm. The ratio between the third size of the minimal surface area and the first or second size may be between 1:1 and 1:2. Preferably, the plurality of pressure communication channels has at least three different sizes, more preferably at least five different sizes.

In embodiments, the plurality of pressure communication channels is configured to influence an airflow flowing from the connecting-edge section to the trailing-edge section.

In embodiments, the inner surface of the plurality of pressure communication channels is smooth so that it does not contain significant irregularities or a sharp edges which may create extra localized noise. The pressure communication channels may be configured to have a gradually decreasing cross-sectional surface area toward the minimal surface area from the first surface area formed on the suction-side surface and/or from the second surface area formed on the pressure-side surface. Preferably, the gradual decreasing is smooth and forming a smooth surface inside the pressure communication channels. The smooth transition of the surface allows for reducing or damping the speed of airflow flowing into the pressure communication channels from the suction-side surface and/or the pressure-side surface. The damped speed of airflow results in a less amount of air flowing through the pressure communication channels creating less drag.

In embodiments, the plurality of pressure communication channels may further comprise at least one airflow blocking means which is located adjacent to the minimal surface area. The airflow blocking means is configured to block the airflow pressure communication between the first surface area and the second surface area. The airflow blocking means may be acoustically permeable. For example, the airflow blocking means may be a flexible or elastic membrane covering a cross section located adjacent to the minimal surface area and allow kinetic energy, e.g., vibration energy, be transferred between the suction-side surface and the pressure-side surface. The airflow blocking means may be configured to be able to vibrate flexibly so that it allows for an acoustic communication between the suction-side surface and the pressure-side surface. This means that the airflow cannot flow through the pressure communication channels but the kinetic energy may be transferred, hence communicated, to the other side of the airflow blocking means.

In embodiments, the aerodynamic structure may include a connecting member which is configured to connect the aerodynamic structure to a wind turbine rotor blade by mechanical fastening or chemical adhesion. The mechanical fastening may include riveting, bolting, welding, and screwing. The chemical adhesion may include using adhesive, glue, epoxy, solvent bonding, viscosity-enhanced bonding, or adhesive tapping.

In embodiments, the aerodynamic structure may further comprise a serration at the trailing-edge, wherein the size of the serration is preferably sub-centimeter.

According to a third aspect of the invention, the present disclosure is directed to an aerodynamic structure to be added to a trailing-edge of a wind turbine rotor blade for noise reduction while having low drag. The aerodynamic structure comprises an increasing pressure communication channel density along a camber line.

In embodiments, the aerodynamic structure may have a pressure-side surface and a suction-side surface which are suitable for to form a continuous airfoil with a wind turbine rotor blade. When added or connected to the wind turbine rotor blade, the pressure-side and suction-side surfaces of the aerodynamic structure are flush with the pressure-side and suction-side surfaces of the wind turbine rotor blade respectively. The aerodynamic structure contains a trailing-edge where the pressure-side surface and the suction-side surface meet. The opposite side of the trailing-edge along a camber line is a connecting edge. The connecting edge which can be connected to the trailing-edge of a wind turbine rotor blade. The aerodynamic structure has a plurality of pressure communication channels, wherein the pressure communication channels comprise a first surface area formed on the suction-side surface, a second surface area formed on the pressure-side surface.

In embodiments, the plurality of pressure communication channels may have various cross-sectional shapes such as circle, ellipse, triangle, diamond, rectangle, kite, trapezium, parallelogram, rhombus, polygons, or any combination thereof. In embodiments, at least two channels of the plurality of pressure communication channels in the aerodynamic structure of the third aspect have HGCC.

In embodiments, the plurality of pressure communication channels may have various sizes and shapes of pressure communication channels. The "size" of a pressure communication channel or a surface area of a pressure communication channel is used in this document to indicate an average diameter of the pressure communication channel or the surface area of the pressure communication channel. This allows for further diminishing periodicities that may reduce the noise reduction performance and hence broadening the tarte noise frequencies. The plurality of pressure communication channels may have cross-sectional surface areas having average diameters between 0.5 - 2.0 mm. In other words, the first size of the first surface area and the second size of the second surface area may be between 0.5 - 2.0 mm. The ratio between the third size of the minimal surface area and the first or second size may be between 1:1 and 1:2. Preferably, the plurality of pressure communication channels has at least three different sizes, more preferably at least five different sizes.

In embodiments, the plurality of pressure communication channels is configured to influence an airflow flowing from the connecting-edge section to the trailing-edge section.

In embodiments, the inner surface of the plurality of pressure communication channels is smooth so that it does not contain significant irregularities or sharp edges which may create extra localized noise. This prevents the separation of any airflow through the pressure communication channel at a sharp edge that would lead to an increased drag. Furthermore, it provides a more forgiving airflow attachment point for a bulky airflow, preventing noise generation related to localized vortices which may be generated by the sharp edge. The pressure communication channels may be configured to have a gradually decreasing cross-sectional surface area toward the minimal surface area from the first surface area formed on the suction-side surface and/or from the second surface area formed on the pressure-side surface. Preferably, the gradual decreasing is smooth and forming a smooth surface inside the pressure communication channels. The smooth transition of the surface allows for reducing or damping the speed of airflow flowing into the pressure communication channels from the suction-side surface and/or the pressure-side surface. The damped speed of airflow results in a less amount of air flowing through the pressure communication channels creating less drag.

In embodiments, the plurality of pressure communication channels may further comprise at least one airflow blocking means which is located between the first and second surface areas. The airflow blocking means is configured to block the airflow pressure communication between the first surface area and the second surface area. The airflow blocking means may be acoustically permeable. For example, the airflow blocking means may be a flexible or elastic membrane covering a cross section located adjacent to the minimal surface area and allow kinetic energy, e.g., vibration energy, be transferred between the suction-side surface and the pressure-side surface. The airflow blocking means may be configured to be able to vibrate flexibly so that it allows for an acoustic communication between the suction-side surface and the pressure-side surface. This means that the airflow cannot flow through the pressure communication channels but the kinetic energy may be transferred, hence communicated, to the other side of the airflow blocking means.

In embodiments, the aerodynamic structure may include a connecting member which is configured to connect the aerodynamic structure to a wind turbine rotor blade by mechanical fastening or chemical adhesion. The mechanical fastening may include riveting, bolting, welding, and screwing. The chemical adhesion may include using adhesive, glue, epoxy, solvent bonding, viscosity-enhanced bonding, or adhesive tapping.

In embodiments, the aerodynamic structure may further comprise a serration at the trailing-edge, wherein the dimension of the serration is sub-centimeter.

According to a fourth aspect of the invention, the present disclosure is directed to a wind turbine rotor blade that has an aerodynamic structure having a plurality of pressure communication channels, located at a trailing-edge section of the wind turbine rotor blade. The aerodynamic structure forms a camber line that is tilted toward a suction-side surface with respect to a camber line of the rest of the wind turbine rotor blade.

In embodiments, the noise is reduced passively by the aerodynamic structure located at the trailing-edge. Due to the passive flow control, the aerodynamic structure does not require external power to achieve the noise reduction. The wind turbine rotor blade comprises a leading-edge section having a leading-edge, a trailing-edge section having a trailing-edge. The wind turbine rotor blade further comprises a pressure-side surface and a suction-side surface extending from the leading-edge section and meeting at the trailing-edge section. An aerodynamic structure is provided at the trailing-edge section. The aerodynamic structure has a plurality of pressure communication channels, wherein the pressure communication channels comprise a first surface area formed on the suction-side surface, a second surface area formed on the pressure-side surface.

In embodiments, a camber line of the aerodynamic structure may be different from a camber line of the rest of the wind turbine rotor blade. As mentioned earlier, a camber line is a reference line extending from the leading-edge to the trailing-edge that connects the midpoints between the pressure-side surface and the suction-side surface. Preferably, the camber line of the aerodynamic structure is tilted toward the suction-side surface with respect to the camber line of the rest of the wind turbine rotor blade. More preferably, the camber line of the aerodynamic structure is tilted toward the suction-side surface with an angle of at least 1°, preferably between 1-10°, preferably between 2-5°. In embodiments, the angle is more preferably between 5-10°, even more preferably 10-20°, and even more preferably 20-30°.

### BRIEF DESCRIPTION OF THE DRAWINGS

The present invention will now be described more fully hereinafter with reference to the accompanying drawings, showing several embodiments of the invention. However, this invention should not be construed as limited to the embodiments set forth herein. Rather, these embodiments are provided so that this disclosure will be thorough and complete, and will fully convey the spirit and scope of the invention to those skilled in the art. The reference is made to the appended figures.
FIG.1 illustrates a perspective view of a wind turbine rotor blade with a plurality of pressure communication channels for noise reduction while having a low drag.
FIG. 2 illustrates a perspective view of an alternative embodiment of the wind turbine rotor blade shown in FIG. 1.
FIG. 3 illustrates an aerodynamic structure comprised in or added to a wind turbine rotor blade for noise reduction with low drag.
FIG. 4 illustrates a side cross-sectional view of an aerodynamic structure of a wind turbine rotor blade, wherein the aerodynamic structure comprises a plurality of pressure communication channels.
FIG. 5 illustrates a perspective view of the aerodynamic structure of FIGS. 1-2 comprised in or added to a wind turbine rotor blade for noise reduction with low drag.
FIG. 6 illustrates a top view of the aerodynamic structure of FIGS. 1-2 comprised in or added to a wind turbine rotor blade for noise reduction with low drag.
FIG. 7 illustrates a top view of an alternative aerodynamic structure comprising a serration.
FIG. 8a-8h illustrate cross-sectional side view of aerodynamic structures integrated or connected to wind turbine rotor blades.

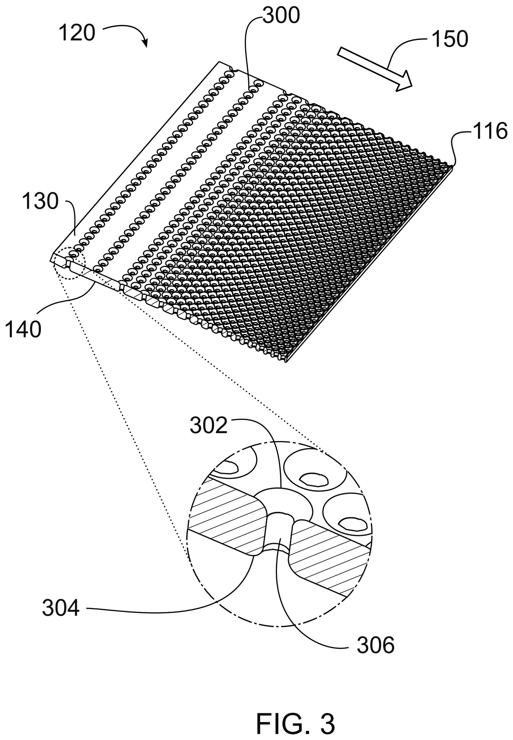

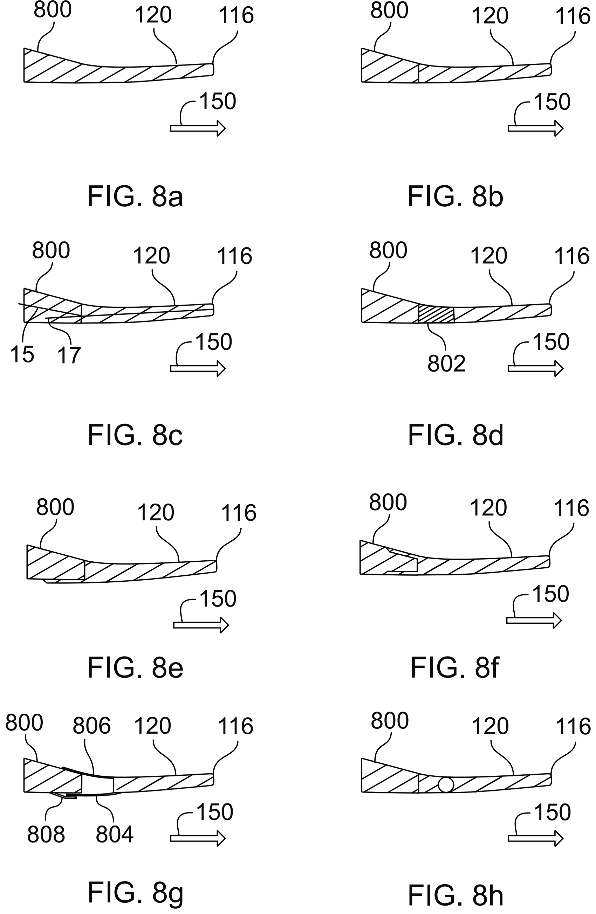

FIG. 8a illustrates the aerodynamic structure of FIG. 3 integrally formed at the trailing edge section of a wind turbine rotor blade.
FIG. 8b illustrates the aerodynamic structure of FIG. 3 connected within a wind turbine rotor blade using a butt-joint.
FIG. 8c illustrates the aerodynamic structure of FIG. 8b wherein a camber line of the aerodynamic structure is tilted toward a suction-side surface with respect to a camber line of the rest of a wind turbine rotor blade.
FIG. 8d illustrates the aerodynamic structure of FIG. 3 connected within a wind turbine rotor blade using a flexible connecting member.
FIG. 8e illustrates the aerodynamic structure of FIG. 3 connected within a wind turbine rotor blade using a socket located at a pressure-side surface.
FIG. 8f illustrates the aerodynamic structure of FIG. 3 connected within a wind turbine rotor blade using a socket located at both pressure-side surface and suction-side surface.
FIG. 8g illustrates the aerodynamic structure of FIG. 3 connected within a wind turbine rotor blade using flexible sheets and a flexible sheet holder.
FIG. 8h illustrates the aerodynamic structure of FIG. 3 connected within a wind turbine rotor blade using a hinge.

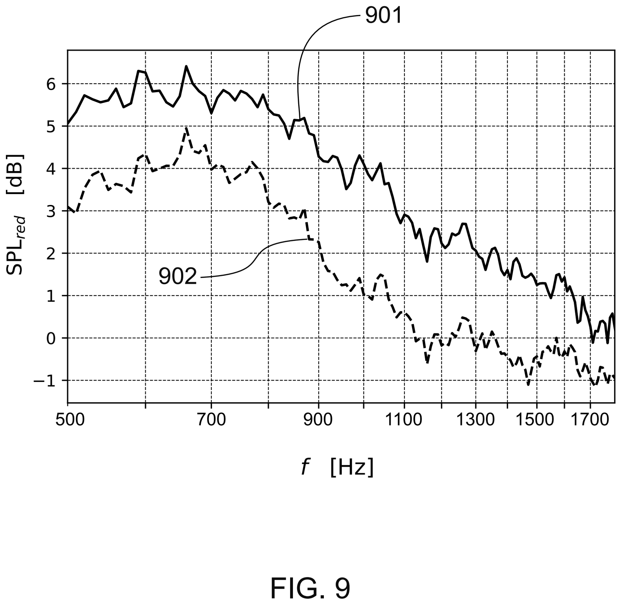

FIG. 9 is a diagram illustrating a sound-pressure-level reduction measurement result which indicates an enhanced noise reducing effect of the first aspect of the present invention over a trailing-edge with pressure communication channels without a minimal surface area.

### DETAILED DESCRIPTION

For simplicity and illustrative purposes, the present invention is described by referring mainly to exemplary embodiments thereof. In the following description, numerous specific details are set forth in order to provide a thorough understanding of the present invention. However, it will be readily apparent to one of ordinary skill in the art that the present invention may be practiced without limitation to these specific details. In this description, well known methods and structures have not been described in detail so as not to unnecessarily obscure the present invention.

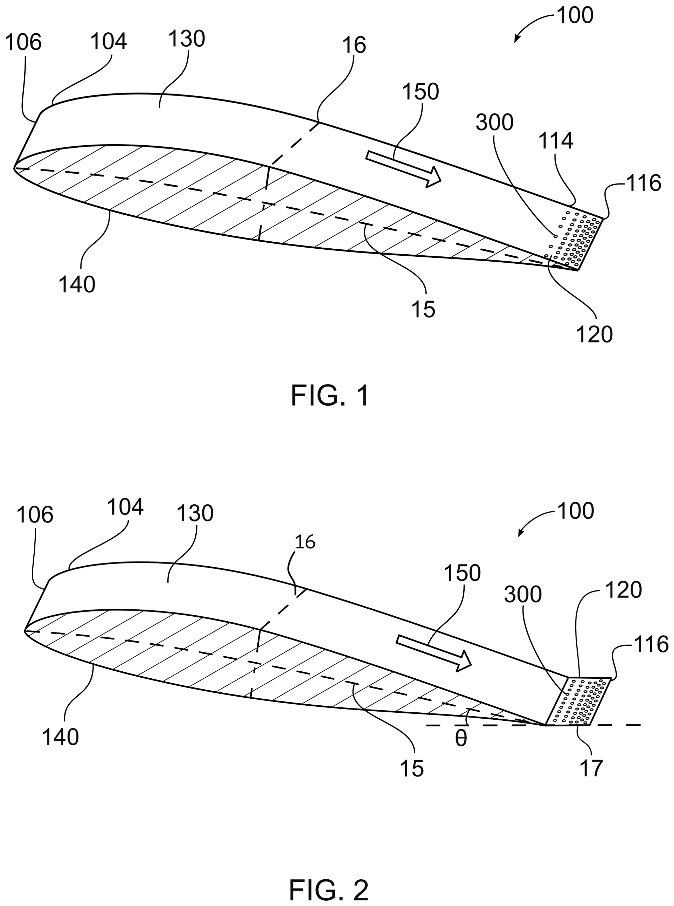

FIG. 1 illustrates a wind turbine rotor blade 100 for providing low noise while having low drag at a trailing edge section 114. The wind turbine rotor blade 100 comprises a leading-edge section 104 which has a leading-edge 106. The leading-edge 106 is an edge of the wind turbine rotor blade 100 that faces the airflow as it rotates. On the other side of the leading-edge 106, a trailing-edge section 114 is provided with a trailing edge 116. The trailing edge 106 is an edge that faces away from the airflow as the wind turbine rotor blade 100 rotates. The trailing edge section 114 is normally more flat and thinner, hence thinner than the leading-edge section 104 in a direction significantly perpendicular to the direction of an airflow that a wind turbine rotor blade is designed to utilize. The wind turbine rotor blade further comprises a pressure-side surface 140 and a suction-side surface 130 extending from the leading-edge section 104 and meeting at the trailing-edge section 114. A span line 16 is a reference line which lies in the midpoints between the leading-edge 106 and the trailing-edge 116. The leading-edge section 104 and the trailing-edge section 114 can be defined with respect to the span line 16. The portion of the wind turbine rotor blade 100 located between the leading-edge 106 and the span line 16 is the leading-edge section 104. Similarly, the portion of the wind turbine rotor blade 100 located between the trailing-edge 116 and the span line 16 is the trailing-edge section 114. A pressure-side surface 130 and a suction-side surface 140 extend from the leading-edge section 104 and meet at the trailing-edge section 114. An aerodynamic structure 120 is provided at the trailing-edge section 114. The aerodynamic structure 120 has acoustic communication channels formed by a plurality of pressure communication channels 300.

FIG. 2 illustrates another embodiment of the wind turbine rotor blade 100. In this embodiment is different from FIG. 1 in that a camber line 17 of an aerodynamic structure 120 is tilted toward a suction-side surface 130 with respect to a camber line 15 of the rest of the wind turbine rotor blade 100. A camber line (15,17), or a mid-camber line, is a reference line extending from the leading-edge 106 to the trailing-edge 116 that connects the midpoints between the pressure-side surface 140 and the suction-side surface 130. The angle θ of the tilting can be any angle between 0° and 90°.

FIG. 3 illustrates an aerodynamic structure 120 having a plurality of through holes 300. A pressure communication channel 300 may have a first surface area 302 formed on the suction-side surface 130 and a second surface area 304 formed on the pressure-side surface 140. The first surface area 302 has a first size and the second surface area 304 has a second size. The sizes are defined by the cross-sectional surface area of the surface areas 302, 304. The pressure communication channel 300 may further comprise a minimal surface area 306. The minimal surface area 306 has a cross-sectional surface area that is smaller than the sizes of the first surface area 302 and the second surface area 304.The minimal surface area 306 shown in this embodiment is in shape of a cylinder.

The plurality of pressure communication channels 300 may define a pressure communication channel number density which is defined by the number of pressure communication channels 300 per unit area or by the number of pressure communication channels per length along a camber line 17. The pressure communication channel number density hence indicates how dense the plurality of pressure communication channels 300 is distributed in the aerodynamic structure 120. The plurality of pressure communication channels 300 may be configured to form a pressure communication channel number density that is increasing along the camber line 17, in an airflow direction 150. The airflow direction 150 is also a direction pointing from the leading-edge section 104 to the trailing-edge section 114 of the wind turbine rotor blade 100. The pressure communication channel number density may vary continuously in the airflow direction 150.

The plurality of pressure communication channels 300 have at least a first and second channel. The first and second channel are separate channels. The first and second channel both have two connection points. The first and second channel both have HGCC.

The plurality of pressure communication channels 300 may have a smooth inner surface so that it does not contain significant irregularities or sharp edges which may create extra localized noise at high frequencies. This is to provide a more forgiving airflow attachment point for a bulky airflow, preventing noise generation related to localized vortices which may be generated by a sharp edge. The pressure communication channel 300 may be configured to have a gradually decreasing cross-sectional surface area toward the minimal surface area 306 from the first surface area 302 formed on the suction-side surface 130 and/or from the second surface area 302 formed on the pressure-side surface 140. Preferably, the gradual decreasing is smooth and forming a smooth surface inside the pressure communication channel 300. The smooth transition of the surface allows for reducing or damping the speed of airflow flowing into the pressure communication channels 300 from the suction-side surface 130 and/or the pressure-side surface 140. The damped speed of airflow results in a less amount of air flowing through the pressure communication channels 300 creating less drag.

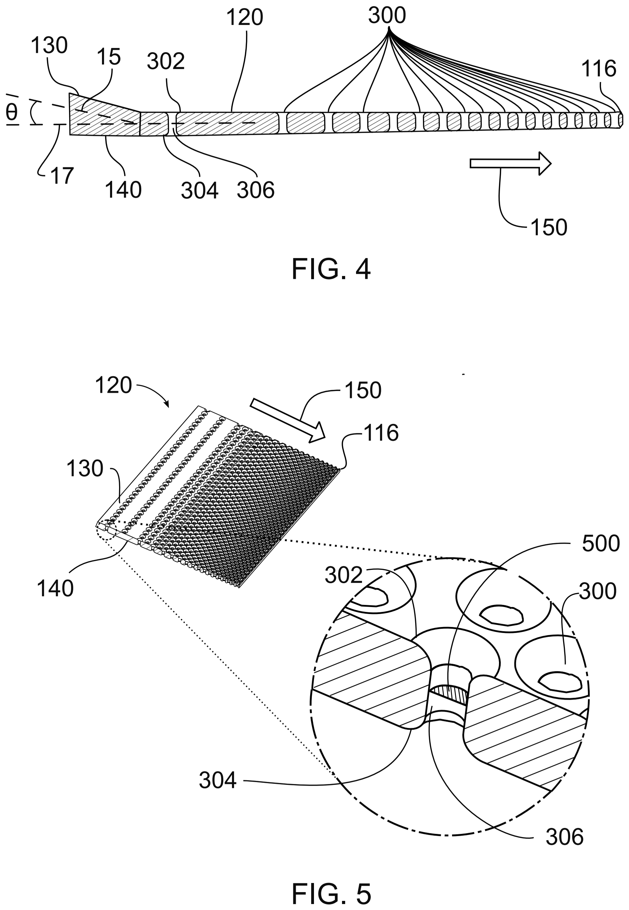

FIG. 4 illustrates a cross-sectional side view of an aerodynamic structure 120 with a plurality of pressure communication channels, wherein the aerodynamic structure 120 is connected to rest of the wind turbine rotor blade 100 of FIG. 2. A camber line 17 of an aerodynamic structure 120 may form an angle θ with a camber line 15 of a wind turbine rotor blade 100 and be tilted toward the suction-side surface 130 with respect to the camber line 15 of the rest of the wind turbine rotor blade 100.

The cross-sectional side view of the plurality of pressure communication channels 300 shows the channels having HGCC. HGCC is characterized by a minimal surface area 306 that has a smaller size than the first surface area 302 on the suction-side surface 130 and the second surface area 304 on the pressure-side surface 140, the cross-sectional side view of the pressure communication channels forms an hourglass-like shape. The pressure communication channel number density may vary in an airflow direction 150 which is a direction pointing from the leading-edge section 104 to the trailing-edge section 114 of the wind turbine rotor blade 100. The embodiment illustrated in FIG. 4 shows the plurality of pressure communication channels 300 are distributed in that the pressure communication channel number density increases along the direction of an airflow 150 toward the trailing-edge 116.

FIG. 5 illustrates an alternative embodiment of the aerodynamic structure 120 illustrated in FIG. 3. This embodiment is different from FIG. 3 in that the pressure communication channel 300 further comprises at least one airflow blocking means 500 which is located adjacent to a minimal surface area 306. The airflow blocking means 500 is configured to block the airflow pressure communication between the first surface area 302 and the second surface area 304. The airflow blocking means 500 may be acoustically permeable. For example, the air flow blocking means may be a flexible or elastic membrane which may allow vibration energy, acoustic wave be transferred between the suction-side surface 130 and the pressure-side surface 140. By blocking the pressure flow but allowing the acoustic flow, the pressure communication channel 300 is not flow permeable but acoustically permeable. It is noted that the flow permeability may generate drag which this airflow blocking means 500 prevents.

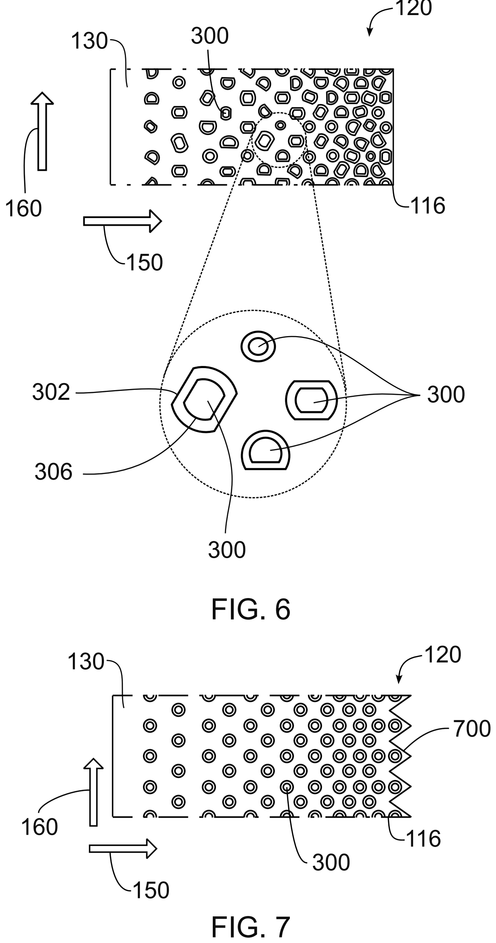

FIG. 6 illustrates an aerodynamic structure 120 wherein the plurality of pressure communication channels 300 is distributed in an arbitrary, irregular manner so that it does not form periodicity in any direction on a suction-side surface 130 and a pressure-side surface 140. FIG. 6 is a top view showing the suction-side surface 130. The suction-side surface 130 can be divided into two orthogonal directions. A direction of airflow 150 and a span direction 160 that is significantly perpendicular to the airflow direction 150. As shown in FIG. 6, the pressure communication channels 300 can be distributed irregularly in the airflow direction 150 and/or the span direction 160 as viewed from the suction-side surface 130. Preferably, the plurality of pressure communication channels 300 has at least three different spacings between the pressure communication channels, more preferably with at least four different spacings, even more preferably with at least five different spacings, and even more preferably with at least six different spacings. The plurality of pressure communication channels 300 may have various sizes and shapes. The plurality of pressure communication channels may have cross-sectional surface areas having average diameters between 0.5 - 2.0 mm. In other words, the first size of the first surface area and the second size of the second surface area may be between 0.5 - 2.0 mm. The ratio between the third size of the minimal surface area and the first or second size may be between 1:1 and 1:2. The shape may be any irregular shape, circle, ellipse, triangle, diamond, rectangle, kite, trapezium, parallelogram, rhombus, polygons, or any combination thereof.

FIG. 7 illustrates an aerodynamic structure 120 having a serration 700 at the trailing edge 116. The aerodynamic structure 120 may have a plurality of pressure communication channels 300, wherein the plurality of pressure communication channels 300 has a pressure communication channel number density which increases in an airflow direction 150. The serration 700 may have a dimension which is less than one centimeter. In other words, the length of the serration 700 occupying in the airflow direction 150 is less than one centimeter.

FIGS. 8a-8h illustrate various embodiments of an aerodynamic structure 120 of a wind turbine rotor blade 100 integrally formed or connected to the rest of the wind turbine rotor blade 800 at the trailing-edge section 114. The aerodynamic structure 120 may from a trailing-edge 116 of the wind turbine rotor blade 100.

As shown in FIG. 8a, the aerodynamic structure 120 may be integrally formed together with the rest of the wind turbine rotor blade 800.

FIG. 8b shows that the aerodynamic structure 120 may be connected to the rest of the wind turbine rotor blade 800 by butt joint. The butt joint may be formed by mechanical fastening or chemical adhesion.

FIG. 8c shows that the aerodynamic structure 120 may be tilted toward the suction-side surface 130 of the wind turbine rotor blade 100. In other words, a camber line 17 of the aerodynamic structure 120 may be tilted toward the suction-side surface 130 with respect to a camber line 15 of the rest of the wind turbine rotor blade 800.

FIG. 8d illustrates that the aerodynamic structure 120 may be connected to the rest of the wind turbine rotor blade 800 by having a flexible connecting member 802 which is placed between the aerodynamic structure 120 and the rest of the wind turbine rotor blade 800. The flexible connecting member may be physically and/or chemically connected to the aerodynamic structure 120 and the rest of the wind turbine rotor blade 800.

FIGS. 8e-8f shows that the connection between the aerodynamic structure 120 and the rest of the wind turbine rotor blade 800 can be made by mechanical sockets. FIG. 8e shows a socket formed on the pressure-side 140 of the wind turbine rotor blade 800. FIG. 8f shows sockets formed on both pressure-side 140 and suction-side 130 of the wind turbine rotor blade 800.

FIG. 8g shows that the connection between the aerodynamic structure 120 and the rest of the wind turbine rotor blade 800 can be made by using flexible sheets 804, 806 of the aerodynamic structure and a flexible sheet holder 808 of the rest of the wind turbine rotor blade 800. A first and a second flexible sheet may be located at a suction-side surface and a pressure-side surface of the aerodynamic structure 120 respectively. When connected to the rest of the wind turbine blade 800, the first flexible sheet 806 makes a close contact with the suction-side surface 130 of the wind turbine rotor blade 800 while the second flexible sheet 808 makes a close contact with the pressure-side surface 140. The connection may further be secured by a flexible sheet holder 808 of the rest of the wind turbine rotor blade 800.

FIG. 8h shows that the connection between the aerodynamic structure 120 and the rest of the wind turbine rotor blade 800 may be formed by using a mechanical hinge. The hinge allows for forming an adjustable angle between the aerodynamic structure 120 and the rest of the wind turbine rotor blade 800.

FIG. 9 illustrates a sound-pressure-level reduction measurement result which indicates an enhanced noise reducing effect of the first aspect of the present invention over a wind turbine rotor blade with pressure communication channels without a minimal surface area.

Two different aerodynamic structures for reducing TBL-TE noise at a trailing-edge were measured:
- Sample 1: an aerodynamic structure with cylindrical pressure communication channels with a constant surface area with a size of 1 mm
- Sample 2: an aerodynamic structure of the first aspect of the present invention, having a plurality of pressure communication channels comprising a minimal surface area with a size of 1 mm and larger first and second surface area with a size of 1.5 mm

Samples 1 and 2 are provided to an identical airfoil DU-96. The specification of the airfoil DU-96 is referred to Timmer et al., "Summary of the Delft University Wind Turbine Dedicated Airfoils," Journal of Solar Energy Engineering, Vol. 125, November 2003, pages. 488-496. The chord length of the airfoil is 200mm. Freestream velocity is set as 28 m/s. The two samples are only different in that sample 2 has a minimal surface area located between a first surface area formed on a suction-side surface and a second surface area formed on a pressure-side surface. The minimal surface area has a size of 1 mm.

The diagram shows the sound-pressure-level reduction *SPL_{red}* plotted against noise frequency f. The reduction of sound pressure level *SPL_{red}* indicates how much sound pressure level is reduced with respect to a reference noise measurement. The reference noise measurement was performed using an aerodynamic structure without any pressure communication channel. A first curve 902 shows the measurement result of sample 1. A second curve 901 shows the measurement result of sample 2. As shown in the diagram, the second curve 901 shows 1-2 dB of additional noise reduction effect compared to the first curve 902 throughout the frequency range spanning from 500 Hz to 1800 Hz.

The present invention may, of course, be carried out in other ways than those specifically set forth herein without departing from essential characteristics of the invention. The present embodiments are to be considered in all respects as illustrative and not limitative, and all changes coming within the meaning and equivalency range of the appended claims are intended to be embraced therein.

In the following, numbered clauses define embodiments of the invention.
Clause 1. A wind turbine rotor blade, wherein the wind turbine rotor blade comprises:
   - a leading-edge section having a leading-edge;
   - a trailing-edge section having a trailing-edge;
   - a pressure-side surface and a suction-side surface extending from the leading-edge section and meeting at the trailing-edge section; and
   - an aerodynamic structure, for reducing noise, provided at the trailing-edge section, wherein the aerodynamic structure has a plurality of through-holes, wherein the plurality of through-holes comprises at least one through-hole comprising:
      - a first surface area formed on the suction-side surface and having a first size;
      - a second surface area formed on the pressure-side surface and having a second size; and
      - a minimal surface area having a third size located between the first surface area and the second surface area, wherein the third size is smaller than the first size and the second size.
Clause 2. The wind turbine rotor blade of clause 1, wherein the plurality of through-holes defines a pressure communication number density that is increasing in the direction from the leading-edge section to the trailing-edge section.
Clause 3. The wind turbine rotor blade of any preceding clause, wherein the at least one through-hole is further configured to have a generally continuous from the pressure-side surface to the minimal surface area.
Clause 4. The wind turbine rotor blade of any preceding clause, wherein the at least one through-hole is further configured to have a generally continuous from the suction-side surface to the minimal surface area.
Clause 5. The wind turbine rotor blade of any preceding clause, wherein the wind turbine rotor blade further comprises a camber line connecting the leading-edge section and the trailing-edge section and lying half-way between the pressure-side surface and the suction-side surface, wherein the camber line of the aerodynamic structure is tilted toward the suction-side surface with respect to a camber line of the rest of the wind turbine rotor blade.
Clause 6. The wind turbine rotor blade of clause 5, wherein the camber line of the aerodynamic structure is tilted toward the suction-side surface with an angle of 1°, preferably between 2-5°.
Clause 7. The wind turbine rotor blade of any preceding clause, wherein the plurality of through-holes is configured to influence an airflow flowing from the leading-edge section to the trailing-edge section.
Clause 8. The wind turbine rotor blade of any preceding clause, wherein a surface area of the at least one through-hole has an average diameter between 0.5 - 2.0 mm.
Clause 9. The wind turbine rotor blade of any preceding clause, wherein a ratio between the third size and the first size is between 1:1 and 1:2.
Clause 10. The wind turbine rotor blade of any preceding clause, wherein a ratio between the third size and the second size is between 1:1 and 1:2.
Clause 11. The wind turbine rotor blade of any preceding clause, wherein the plurality of through-holes comprises at least three different sizes of pressure-side surface area.
Clause 12. The wind turbine rotor blade of any preceding clause, wherein the plurality of through-holes comprises at least three different sizes of suction-side surface area.
Clause 13. The wind turbine rotor blade of any preceding clause, wherein the plurality of through-holes may form pressure communication between an air flow on the pressure-side surface and an air flow on the suction-side surface.
Clause 14. The wind turbine rotor blade of any preceding clause, wherein the plurality of through-holes comprises at least one airflow blocking means configured between the suction-side surface and the pressure-side surface, wherein the at least one airflow blocking means is acoustically permeable.
Clause 15. The wind turbine rotor blade of any preceding clause, wherein the aerodynamic structure is an add-on attached to the trailing-edge section of the wind turbine rotor blade.
Clause 16. The wind turbine rotor blade of any preceding clause, wherein the aerodynamic structure is integrally formed as the trailing-edge section of the wind turbine rotor blade.
Clause 17. The wind turbine rotor blade of any of clauses 1-16, wherein the aerodynamic structure is forming the trailing-edge section and connected to rest of the wind turbine rotor blade using any or any combination of following means: (i) a butt joint, (ii) a socket at the suction-side surface, (iii) a socket at the pressure-side surface, (iv) a hinge, (v) a flexible connecting member, or (vi) flexible connecting sheet elements.
Clause 18. The wind turbine rotor blade of any preceding clause, wherein the plurality of through-holes comprises at least two different shapes of through-holes, wherein the at least two different shapes are any combination of: (i) circle (ii) circle having a flat surface (iii) ellipse, (iv) triangle, and (v) diamond.
Clause 19. The wind turbine rotor blade of any preceding clause, wherein the plurality of through-holes is irregularly distributed with at least three different spacings, preferably with at least four different spacings, more preferably with at least five different spacings, even more preferably with at least six different spacings.
Clause 20. The wind turbine rotor blade of any preceding clause, wherein the aerodynamic structure further comprises a serration at the trailing-edge.
Clause 21. A method of producing the wind turbine rotor blade of any preceding clause for noise reduction.
Clause 22. An aerodynamic structure for mounting onto a surface of a wind turbine rotor blade, wherein the aerodynamic structure comprises:
   - a plurality of through-holes, wherein the plurality of through-holes comprises at least one through-hole defining a pressure-side surface area and a suction-side surface area; and
   - a minimal surface area smaller than the pressure-side surface area and the suction-side area, located between the pressure-side surface area and the suction-side surface area.
Clause 23. A wind turbine comprising:
   - a wind turbine tower having a top and a bottom;
   - a nacelle arranged at the top of the wind turbine tower;
   - a rotor hub rotatably mounted to the nacelle;
   - one or more wind turbine blades of clause 1 mounted to the rotor hub, wherein the wind turbine blades define a rotor plane;
   - a shaft coupled to the rotor hub; and

   - a generator coupled to the shaft, wherein the generator configured to transform a torque of the shaft into electrical power.

## Claims

1. A wind turbine rotor blade, wherein the wind turbine rotor blade comprises:
- a leading-edge section having a leading-edge;
- a trailing-edge section having a trailing-edge;
- a pressure-side surface and a suction-side surface extending from the leading-edge section and meeting at the trailing-edge section; and
- an aerodynamic structure, for reducing noise, provided at the trailing-edge section, wherein the aerodynamic structure comprises a plurality of pressure communication channels between the suction-side surface and the pressure-side surface;
- a camber line connecting the leading-edge section and the trailing-edge section and lying half-way between the pressure-side surface and the suction-side surface, wherein the camber line of the aerodynamic structure is tilted toward the suction-side surface with respect to a camber line of the rest of the wind turbine rotor blade.

2. The wind turbine rotor blade of any preceding claim, wherein the camber line of the aerodynamic structure is tilted toward the suction-side surface with an angle of at least 1°, preferably between 1.5-10°.

3. The wind turbine rotor blade of claim 1, wherein the camber line of the aerodynamic structure is tilted toward the suction-side surface with an angle between 2-5°.

4. The wind turbine rotor blade of any of previous claims, wherein the plurality of pressure communication channels each have a generally continuous inner surface connected to the pressure side surface and/or the suction-side surface.

5. The wind turbine rotor blade of any of previous claim, wherein the plurality of pressure communication channels define a pressure communication channel number density that is increasing in the direction from the leading-edge section to the trailing-edge section.

6. The wind turbine rotor blade of any of the preceding claims, wherein the plurality of pressure communication channels has a first pressure communication channel and a second pressure communication channel, wherein the first pressure communication channel has an hourglass channel configuration (HGCC) and the second pressure communication channel has the HGCC,
wherein the HGCC is formed by:
- a first surface area formed on the suction-side surface and having a first size,
- a second surface area formed on the pressure-side surface and having a second size, and
- a third minimal surface area having a third size formed within the pressure communication channel and located between the first surface are and the second surface area, wherein the third size is smaller than the first size and than the second size.

7. The wind turbine rotor blade of claim 6, wherein the first and second size are in size of
surface areas, preferably formed by a circle having a diameter between 0.5 - 2.0 mm; and/or
wherein a surface area ratio between the third size and the first size is between 1:1 and 1:2;
and/or
wherein a surface area ratio between the third size and the second size is between 1:1 and 1:2.

8. The wind turbine rotor blade of any preceding claim, wherein the plurality of pressure communication channels comprises at least three different sizes of surface areas on the pressure-side surface and/or on the suction-side surface.

9. The wind turbine rotor blade of any preceding claim, wherein the plurality of pressure communication channels comprises at least one airflow blocking means configured between the suction-side surface and the pressure-side surface, wherein the at least one airflow blocking means is acoustically permeable, preferably the blocking means is located at the third minimal surface area.

10. The wind turbine rotor blade of any preceding claim, wherein the aerodynamic structure is an add-on attached to the trailing-edge section of the wind turbine rotor blade, or wherein the aerodynamic structure is integrally formed as the trailing-edge section of the wind turbine rotor blade.

11. The wind turbine rotor blade of any preceding claim, wherein the aerodynamic structure is forming the trailing-edge section and connected to rest of the wind turbine rotor blade using any or any combination of following means: (i) a butt joint, (ii) a socket at the suction-side surface, (iii) a socket at the pressure-side surface, (iv) a hinge, (v) a flexible connecting member, or (vi) flexible connecting sheet elements.

12. The wind turbine rotor blade of any preceding claim, wherein the plurality of pressure communication channels is irregularly distributed with at least three different spacings, preferably with at least four different spacings, more preferably with at least five different spacings, even more preferably with at least six different spacings.

13. The wind turbine rotor blade of any preceding claim, wherein the aerodynamic structure further comprises a serration at the trailing-edge.

14. A method of producing the wind turbine rotor blade of any preceding claim for noise reduction.

15. A wind turbine comprising:
- a wind turbine tower having a top and a bottom;
- a nacelle arranged at the top of the wind turbine tower;
- a rotor hub rotatably mounted to the nacelle;
- one or more wind turbine blades of claim 1 mounted to the rotor hub, wherein the wind turbine blades define a rotor plane;
- a shaft coupled to the rotor hub; and
- a generator coupled to the shaft, wherein the generator configured to transform a torque of the shaft into electrical power.
